Europäisches Patentamt

European Patent Office

Office européen des brevets

(19)

(11) Veröffentlichungsnummer : **0 351 552 B1**

(12) **EUROPÄISCHE PATENTSCHRIFT**

(45) Veröffentlichungstag der Patentschrift :
**26.08.92 Patentblatt 92/35**

(51) Int. Cl.⁵ : **B01D 46/24**

(21) Anmeldenummer : **89110847.4**

(22) Anmeldetag : **15.06.89**

(54) Vorrichtung zur Abscheidung von Verunreinigungen aus Gasen.

(30) Priorität : **22.06.88 DE 3821101**

(43) Veröffentlichungstag der Anmeldung :
**24.01.90 Patentblatt 90/04**

(45) Bekanntmachung des Hinweises auf die
Patenterteilung :
**26.08.92 Patentblatt 92/35**

(84) Benannte Vertragsstaaten :
**DE GB NL**

(56) Entgegenhaltungen :
**GB-A- 2 155 354**
**US-A- 4 053 290**

(73) Patentinhaber : **Filtan Filter-Anlagenbau
GmbH
Gänsgasse 9
W-6456 Langenselbold (DE)**
Patentinhaber : **BEB ERDGAS UND ERDÖL
GMBH
Riethorst 12
W-3000 Hannover 51 (DE)**

(72) Erfinder : **Manfred, Lorey
Gänsgasse 9
W-6456 Langenselbold (DE)**

(74) Vertreter : **Dr. Fuchs, Dr. Luderschmidt
Dipl.-Phys. Seids, Dr. Mehler Patentanwälte
Abraham-Lincoln-Strasse 7
W-6200 Wiesbaden (DE)**

EP 0 351 552 B1

Jouve, 18, rue Saint-Denis, 75001 PARIS

## Beschreibung

Die Erfindung betrifft eine Vorrichtung zur Abscheidung von Verunreinigungen aus Gasen nach dem Oberbegriff des Anspruches 1.

Eine gattungsgemäße Vorrichtung ist beispielsweise aus der DE-PS 34 40 506 bekannt. Bei der in dieser Druckschrift beschriebenen Ausführungsform nach den Fig. 5 und 6 ist in einem Gehäuse eine Mehrzahl von Filterelementen um ein zentrales Filterelement herum angeordnet.

Obwohl durch diese Anordnung eine gewisse Erhöhung der Reinigungskapazität möglich ist, ist die gattungsgemäße Vorrichtung insbesondere im Hinblick auf eine noch steigerungsfähige Abscheideleistung aufgrund mangelnder Strömungsgleichheit im Innenraum der Filterelemente verbesserungswürdig.

Es ist daher Aufgabe der vorliegenden Erfindung, eine Vorrichtung zur Abscheidung von Verunreinigungen aus Gasen der im Oberbegriff des Anspruchs 1 angegebenen Art zu schaffen, die eine beträchtliche Erhöhung der Abscheideleistung auch bei feinen Verunreinigungen und eine Erhöhung des Durchsatzes des zu reinigenden Gases ermöglicht.

Die Lösung dieser Aufgabe erfolgt durch die Merkmale des Anspruches 1.

Durch die Aufteilung der Filterelemente in zwei Stufen wird zunächst die Möglichkeit für einen erhöhten Gas durchsatz geschaffen. Dabei ergeben sich besonders vorteilhafte Anströmverhältnisse durch das Vorsehen der Strömungselemente, da dadurch eine sich erweiternde Strömungsfläche im Filterkörper geschaffen wird, was eine annähernd gleichmäßige Strömungsgeschwindigkeit im Innenraum und eine gleichmäßige Flächenbelastung zur Folge hat. Somit ist der Fluiddurchsatz über die gesamte Länge des Filterkörpers bzw. Strömungselementes annähernd gleich groß, d.h. der Fluiddurchsatz ist im größten Teil des inneren Strömungsraumes etwa genauso groß wie in der Nähe der verschlossenen Stirnseite des Filterkörpers, also im verengten Teil des inneren Strömungsraumes.

Dabei sind die Filterelemente der erfindungsgemäßen Vorrichtung sowohl für einen Durchfluß von außen nach innen als auch für einen Durchfluß von innen nach außen gleichermaßen wirksam, da die Geschwindigkeit im gesamten inneren Strömungsraum konstant durch den sich in Abhängigkeit vom Volumenstrom ändernden Strömungsquerschnitt zwischen Innendurchmesser des inneren Strömungsraumes und jeweiligem Durchmesser des Strömungselementes ist.

So wird auf einfache Weise eine konstante Geschwindigkeit und ein konstanter Fluiddurchsatz im inneren Strömungsraum zwangsläufig wirksam.

Des weiteren ergibt sich vorteilhafterweise eine Unabhängigkeit von der Durchflußrichtung und Unempfindlichkeit gegen Volumenstromschwankungen, die im praktischen Betrieb nahezu unvermeidlich sind.

Die Unteransprüche haben vorteilhafte Weiterbildungen der Erfindung zum Inhalt.

Nachfolgend wird eine Ausführungsform der erfindungsgemäßen Vorrichtung anhand der Zeichnung näher erläutert.

Es zeigt:

Fig. 1 eine leicht vereinfachte Darstellung eines Längsschnittes durch die erfindungsgemäße Vorrichtung, und

Fig. 2 eine der Fig. 1 entsprechende Darstellung entlang der Linie II-II in Fig. 1.

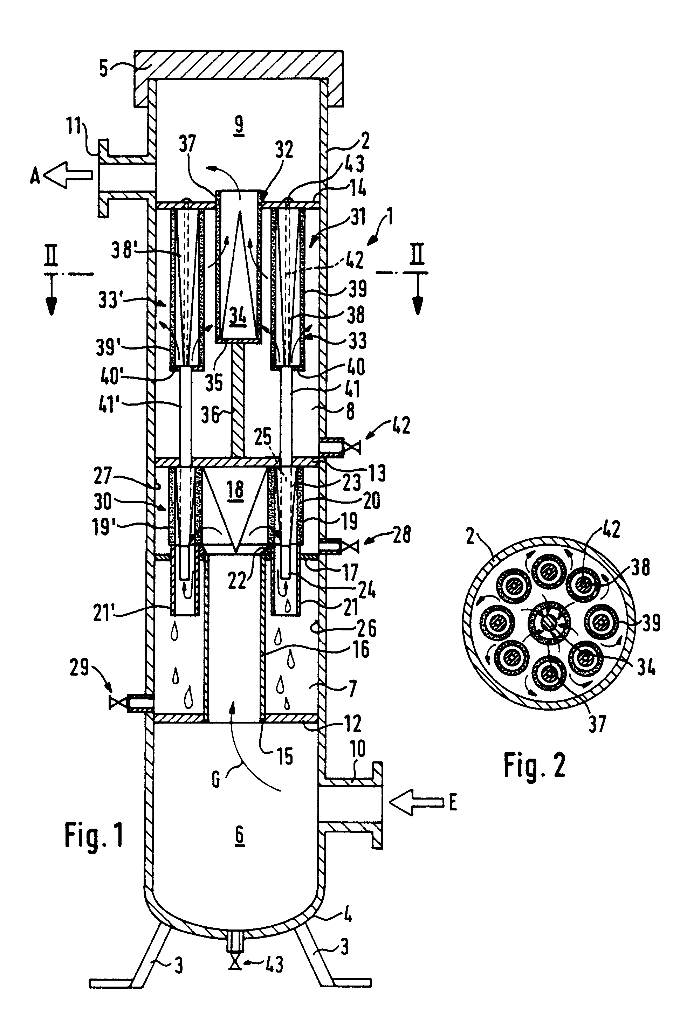

In Fig. 1 ist eine Vorrichtung 1 zur Abscheidung von Verunreinigungen aus Gasen dargestellt.

Die Vorrichtung 1 weist ein im wesentlichen rohrförmig ausgebildetes Gehäuse 2 auf. Das Gehäuse 2 ist im Beispielsfall als vertikalstehendes Gehäuse ausgebildet und weist hierzu eine geeignete Anzahl von Standbeinen 3 auf, die an der Außenfläche eines abgerundeten Bodenteiles 4 des Gehäuses 2 befestigt sind.

An der gegenüberliegenden Seite des Gehäuses 2 ist dieses mittels eines Deckels 5 verschlossen.

Wie Fig. 1 verdeutlicht, ist der Innenraum des Gehäuses 2 in insgesamt vier Hauptkammern 6 bis 9 unterteilt. Dabei steht die Hauptkammer 6 im Bodenbereich des Gehäuses 2 mit einem einen Einlaß E bildenden Rohrstutzen 10 in Verbindung, während die Hauptkammer 9 einen Rohrstutzen 11 aufweist, der den Auslaß A der Vorrichtung 2 bildet.

Die Hauptkammer 7 wird einerseits von einer Abschlußplatte 12 und auf der gegenüberliegenden Seite von einer Zwischenplatte 13 begrenzt. Die Abschlußplatte 12 grenzt hierbei an die Hauptkammer 6 an und ist auf geeignete Art und Weise innerhalb des Gehäuses 2, beispielsweise durch Schweißung, festgelegt.

Entsprechend ist die Zwischenplatte 13 festgelegt und bildet die Abgrenzung zur Hauptkammer 8.

Die Hauptkammer 8 ihrerseits ist gegenüber der Hauptkammer 9 mittels einer zweiten Abschlußplatte 14 abgegrenzt, die ebenfalls auf geeignete Art und Weise, wie beispielsweise durch eine Schweißung, im Innenraum des Gehäuses 2 festgelegt ist.

Wie Fig. 1 zeigt, weist die Abschlußplatte 12, die auch als Manifold bezeichnet wird, eine im Beispielsfalle zentrische Ausnehmung 15 auf, in die ein Ende eines zentrisch angeordneten Zuführrohres 16 eingesetzt ist. An seinem gegenüberliegenden Ende ist das Zuführrohr 16 in eine zentrisch angeordnete Ausnehmung einer Halteplatte 17 eingesetzt, die ihrerseits umfangsseitig im Innenraum des Gehäuses 2 festgelegt ist.

Konzentrisch zur Längsachse des Gehäuses 2 ist auf der Zwischenplatte 13 ein kegelförmiges Strömungselement 18 festgelegt. Kreisringförmig um dieses Strömungselement 18 ist eine Mehrzahl von Filterelementen angeordnet, von denen in Fig. 1 aufgrund der gewählten Darstellung nur die Filterelemente 19 und 19′ sichtbar sind. Die Zahl der Filterelemente hängt vom jeweiligen Einsatzfall ab und kann beispielsweise insgesamt acht Filterelemente umfassen. Jedes dieser Filterelemente ist gleich ausgebildet, so daß im folgenden repräsentativ nur das Filterelement 19 beschrieben werden wird.

Dieses Filterelement 19 weist bei der dargestellten Ausführunsform einen rohrförmigen Filterkörper 20 auf, dessen Filterschicht aus einem fluiddurchlässigen Filterstoff besteht. Ein Ende des Filterkörpers 20 ist auf der Zwischenplatte 13 angeordnet, während das andere Ende des Filterkörpers 20 an ein Rohrstück 21 anschließt, das durch eine weitere außermittig angeordnete Ausnehmung der Halteplatte 17 hindurch verläuft. Wie Fig. 1 ferner zeigt, stützt sich ein radial außenliegender Stirnflächenbereich des Endes des Filterelementes 19, das an das Rohrstück 21 anschließt, auf einem ringförmigen Adapterteil 22 ab, das auf einem an das Rohrstück 21 radial nach innen angrenzenden Teilbereich der Halteplatte 17 und der Stirnseite des Zuführrohres 16 angeordnet ist. Das Adapterteil 22 weist eine konisch sich nach außen vergrößernde Innenfläche auf, die einen glatten Strömungsübergang in Richtung auf das Strömungselement 18 zu schafft.

Zentrisch im Inneren des Filterkörpers 20 ist bei der dargestellten bevorzugten Ausführungsform ein kegelförmiges Strömungselement 23 angeordnet, das an seinem einen Ende auf der Halteplatte 13 festgelegt ist und an seinem gegenüberliegenden Ende mit einem kurzen Einströmzylinder 24 versehen ist, der im Rohrstück 21 endet, hohl ist und in Strömungsverbindung mit einem Strömungskanal 25 im Strömungselement 23 steht.

Wie Fig. 1 ferner verdeutlicht, wird die Hauptkammer 7 durch die Halteplatte 17, durch die die durch sie hindurch verlaufenden Teile dicht angeordnet sind, in zwei Teilräume 26 und 27 unterteilt, deren Anordnung der Fig. 1 im einzelnen entnommen werden kann. Schließlich ist aus Fig. 1 ersichtlich, daß sowohl der obere Teilraum 27 wie auch der untere Teilraum 26 mit je einer Ablaßvorrichtung 28 und 29 versehen ist, die vorzugsweise jeweils am tiefsten Punkt der jeweiligen Teilräume 26 bzw. 27 angeordnet ist und mit geeigneten Anschluß- und Verschlußeinrichtungen versehen sein kann.

Die zuvor beschriebene Anordnung des zentrischen Strömungselementes 18 und der Filterelemente 19, 19′, die das Strömungselement 18 kreisförmig umgeben, bildet eine erste Filterstufe 30 der Vorrichtung 1.

Eine zweite Filterstufe 31 ist in der dritten Hauptkammer 8 angeordnet.

Die zweite Filterstufe 31 weist im Beispielsfalle ein zentrisch angeordnetes Filterelement 32 und bei der bevorzugten Ausführungsform insgesamt acht dieses umgebende und auf einer Kreislinie liegende Filterelemente auf, von denen in Fig. 1 die Filterelemente 33 und 33′ gezeigt sind, während die Schnittdarstellung in Fig. 2 alle acht Filterelemente sowie das zentrische Filterelement 32 zur genauen Darstellung der Lage zeigt.

Prinzipiell sind die Filterelemente 30, 33, 33′ der zweiten Filterstufe 31 genauso aufgebaut, wie die Filterelemente 19, 19′ der ersten Filterstufe, weisen also einen Filterkörper und ein in diesem angeordnetes Strömungselement in Kegelform auf. Daher kann diesbezüglich auf die vorherigen Ausführungen Bezug genommen werden. Als Unterschied ist jedoch hervorzuheben, daß das zentrische Filterelement 32 ein schlanker ausgebildetes Strömungselement 34 aufweist, das auf einer Platte 35 befestigt ist, die ihrerseits über eine Befestigungseinrichtung 36, z. B. in Form einer Befestigungsstange auf der Zwischenplatte 13 festgelegt ist.

Fig. 2 zeigt, daß die Spitze des Kegels bzw. Strömungselementes 34 auf die vierte Hauptkammer 9 zuweist. Das Strömungselement 34 ist wiederum von einem rohrförmigen Filterkörper 37 umgeben, dessen in der Hauptkammer 9 mündendes Ende in einer zentrischen Ausnehmung der Abschlußplatte 14 angeordnet ist.

Die kegeligen Strömungselemente 38 bzw. 38′ der umgebenden Filterelemente 33 bzw. 33′ weisen mit ihren Spitzen auf die Zwischenplatte 13 zu. Im Bereich dieser Kegelspitze sind die Filterkörper 39 bzw. 39′ der Filterelemente 33 bzw. 33′ jeweils mittels einer Abdeckplatte 40 bzw. 40′ verschlossen, die eine mittige Ausnehmung aufweist, in der ein Ende einer Veibindungsrohrleitung 41 bzw. 41′ angeordnet ist, die in Strömungsverbindung mit dem Strömungskanal 25 der Filterlemente 19 bzw. 19′ der ersten Filterstufe 31 stehen. Das in der Abdeckplatte 40 angeordnete Ende der Verbindungsrohrleitungen 41 bzw. 41′ ist offen, so daß eine durchgehende Strömungsverbindung geschaffen wird.

Ferner zeigt Fig. 1 eine mittig durch die Filterelemente 33 bzw. 33′ verlaufende Spindel 42, die an ihrem Ende mittels einer Befestigungseinrichtung, wie beispielsweise einer Mutter 43 auf der Abschlußplatte 14 festgelegt ist. Mittels dieser Spindel 42 kann das Strömungselement 38 auf der Abschlußplatte 14 festgelegt werden.

Schließlich zeigt Fig. 1, daß auch die Hauptkammer 8 mit einer Ablaßvorrichtung 42 versehen ist, die oberhalb der Zwischenplatte 13 angeordnet ist.

Beim Betrieb der Vorrichtung 1 wird ein zu reinigendes Gas über den Einlaßstutzen 10 in das Zuführrohr 16 eingeleitet, wie dies durch den Pfeil G angedeutet ist. Der zu reinigende Gasstrom trifft dann auf das Strömungselement 18, das diesen radial nach außen ableitet. Da die Filterelemente 19, 19′ in geringen Abständen zueinander angeordnet sind, kann ein Teil des Gasstromes G zwischen den Filterkörpern der Filterelemente in den außenliegenden Ringraum gelangen, wie dies in Fig. 2 im Zusammenhang mit der Filterstufe 31 angedeutet ist. Somit wird der Gasstrom gleichmäßig von außen auf den gesamten Umfang der Filterkörper 20 der Filterelemente 19, 19' geleitet und strömt durch den Filterkörper hindurch in den Innenraum, wie dies durch die kleinen Pfeile in Fig. 1 angedeutet ist. Hierbei wird ein erster Teil der Verunreinigung, beispielsweise in Form von Flüssigkeit, abgeschieden und läuft über das Rohrstück 11, 21' in die Hauptkammer 7, von der es durch die Auslaßvorrichtung 29 abgeleitet werden kann. Ein weiterer Teil der abgeschiedenen Verunreinigungen sammelt sich im oberen Teilraum 27 bzw. der Hauptkammer 6 und kann von dort über die Ablaßvorrichtung 28 bzw. 43 abgezogen werden.

Nach dem Eintritt in den Innenraum der Filterelemente 19, 19' strömt das Gas über die zuvor beschriebene Strömungsverbindung in den Innenraum der Filterelemente 33, 33', wobei eine weitere Filtration stattfindet und die abgeschiedenen Verunreinigungen in die obere Hauptkammer 8 laufen, von der aus die Verunreinigungen durch die Ablaßvorrichtung 42 entnommen werden können.

Der aus den Filterelementen 33, 33' austretende Gasstrom wird schließlich in das mittige Filterelement 32 von außen eingeleitet, wobei eine letzte Filtration durchgeführt wird und die sich in der dritten Hauptkammer 8 sammelnden Verunreinigungen über die Ablaßvorrichtung 42 entnommen werden können. Danach wird der Gasstrom über die vierte Hauptkammer 9 und den Auslaß 11 abgeleitet.

Mit der erfindungsgemäßen Vorrichtung 1 ist ein hoher Gasdurchsatz und eine sehr große Filterleistung möglich, da die Filtereigenschaften der Filterelemente durch eine starke Vergleichsmäßigung der Gasströmung sehr gut sind.

## Patentansprüche

1. Vorrichtung (1) zur Abscheidung von Verunreinigungen aus Gasen
mit einem Gehäuse (2), das einen Einlaß (E, 10) und einen Auslaß (11, A) für das zu reinigende Gas aufweist,
mit einer Mehrzahl von Filterelementen (19, 19'; 32, 33, 33'), die im Gehäuse (2) gelagert sind, und
mit mindestens einer Ablaßvorrichtung (28, 29, 42, 43) zur Ableitung der ausgefilterten Verunreinigung aus dem Gehäuse (2), dadurch gekennzeichnet,
daß die Filterelemente (19, 19'; 32, 33, 33') in eine erste Stufe (30) und eine zweite Stufe (31) unterteilt sind, die im Gehäuse (2) in Strömungsrichtung des Gases (G) hintereinander angeordnet sind, wobei eine Strömungsverbindung (41,41') zwischen dem Austritt der Filterelemente der ersten Stufe und dem Eintritt der Filterelemente der zweiten Stufe besteht,
daß die Filterelemente (19, 19') der ersten Stufe (30) kreisförmig um ein zentral im Gehäuse (2) angeordnetes kegelförmiges Strömungselement (18) herum angeordnet sind, und
daß die zweite Stufe (31) ein zentral angeordnetes Filterelement (32) und um diese kreisförmig herum angeordnete weitere Filterelemente (33, 33') aufweist,
wobei zumindest das mittig angeordnete Filterelement (32) ein Strömungselement (34) aufweist.

2. Vorrichtung nach Anspruch 1, dadurch gekennzeichnet, daß jedes Filterelement (19, 19') der ersten Stufe (30) einen rohrförmigen Filterkörper (20) und ein in diesem axial angeordnetes kegelförmiges Strömungselement (23) aufweist.

3. Vorrichtung nach Anspruch 1 oder 2, dadurch gekennzeichnet, daß auch die das zentrische Filterelement (32) umgebenden Filterelemente (33, 33') der zweiten Stufe (31) kegelige Strömungselemente (38) aufweisen.

4. Vorrichtung nach einem der Ansprüche 1 bis 3, dadurch gekennzeichnet, daß das Gehäuse (2) einen in vier Hauptkammern (6 bis 9) unterteilten Innenraum aufweist, wobei bei aufrechtstehendem Gehäuse die vom Bodenbereich aus gesehen unteren Hauptkammern (6, 7, 8) Sammelräume für die abgeschiedenen Verunreinigungen bilden.

5. Vorrichtung nach einem der Ansprüche 1 bis 4, dadurch gekennzeichnet, daß die Strömungskörper (18, 23) der ersten Stufe (30) mit ihren Spitzen bei aufrechtstehendem Gehäuse (2) in Richtung auf dessen unterste Teilkammer (6) weisen.

6. Vorrichtung nach einem der Ansprüche 1 bis 5, dadurch gekennzeichnet, daß das Strömungselement (34) des zentrischen Filterelementes (32) der zweiten Stufe (31) mit seiner Spitze nach oben in Richtung auf die oberste Teilkammer (9) weist, während die Strömungselemente (38) der umgebenden Filterelemente (33, 33') mit ihren Spitzen nach unten auf die unterste Teilkammer (6) zuweisen.

## Claims

1. A device (1) for the separation of impurities from gases having

   a housing (2) comprising an inlet (E, 10) and an outlet (11, A) for the gas to be purified,

   a plurality of filter elements (19, 19'; 32, 33, 33') being positioned in the housing (2) and

   at least an outflow device (28, 29, 42, 43) to let the filtered impurities out from the housing (2), characterized in that

   the filter elements (19, 19'; 32, 33, 33') are subdivided into a first stage (30) and a second stage (31), the said stages being arranged one after another with concern to the flowing direction of the gas (G), a flow connection (41, 41') being provided between the outlet of the filter elements of the first stage and the inlet of the filter elements of the second stage,

   in that the filter elements (19, 19') of the first stage (30) are arranged in the form of a circle round a flow element (18) positioned in the center of the housing (2) and

   in that the second stage comprises a filter element (32) situated in the center and further filter elements (33, 33') positioned in a circle round said filter element (32), whereas at least the filter element (32) situated in the center comprises a flow element (34).

2. A device according to claim 1, characterized in that each filter element (19, 19') of the first stage (30) comprises a tubiform filter body (20) and a coniform flow element (23) axially positioned therein.

3. A device according to claims 1 or 2, characterized in that the filter elements (33, 33') of the second stage surrounding the centric filter element (32) comprise coniform flow elements (38).

4. A device according to one of claims 1 through 3, characterized in that the housing comprises an interior subdivided into 4 main chambers (6 to 9) and that, the housing being upright, in view from the bottom portion, the lower main chambers are constituting collecting chambers for the deposited impurities.

5. A device according to one of claims 1 through 4, characterized in that, the housing (2) being upright, the flow bodies (18, 23) of the first stage (30), with respect to their point, are orientated in the direction towards the lowest sectional chamber (6).

6. A device according to one of claims 1 through 5, characterized in that, as regards its point, the flow element (34) of the centric filter element (32) of the second stage (31) is orientated in the direction of the topmost sectional chamber (9) whilst, as regards their points, the flow elements (38) of the surrounding filter elements (33, 33') are orientated downwards towards the lowest sectional chamber (6).

## Revendications

1. Dispositif (1) de séparation des polluants dans des gaz, ledit dispositif comportant:

   une boîte (2) montrant un orifice d'admission (E, 10) et une issue (11, A) pour le gaz qu'il faut nettoyer,

   une pluralité d'éléments filtrants (19, 19'; 32, 33, 33') logés dans la boîte (2), et

   au moins un dispositif de décharge (28, 29, 42, 43) pour l'enlèvement des polluants extraits par filtration de la boîte (2), caractérisé en ce

   que les éléments filtrants (19, 19'; 32, 33, 33') sont sectionnés en un premier étage (30) et un second étage (31) aménagés dans la boîte (2) l'un après l'autre au sens d'écoulement du gaz (G), pendant qu'une connexion d'écoulement (41, 41') existe entre la sortie des éléments filtrants du premier étage et l'entrée des éléments filtrants du second étage,

   que les éléments filtrants (19, 19') du premier étage (30) sont placés en disposition circulaire autour d'un élément, d'écoulement conique (18) situé au centre de la boîte (2), et que le second étage (31) comporte un élément filtrant placé au centre (32) et d'autres éléments filtrants (33, 33') placés autour dudit élément filtrant (32), dont au moins l'élément filtrant centrique (32) comporte un élément d'écoulement (34).

2. Dispositif selon la revendication 1, caractérisé en ce que chacun des éléments filtrants (19, 19') du premier étage comporte un corps filtrant tubulaire (20) et un élément d'écoulement (23), y étant placé axialement.

3. Dispositif selon les revendications 1 ou 2, caractérisé en ce que les éléments filtrants (33, 33') du second étage entourant l'élément filtrant centrique (32) comportent également des éléments d'écoulement coniques (38).

4. Dispositif selon une des revendications 1 à 3, caractérisé en ce que la boîte (2) montre un intérieur subdivisé en quatre chambres principales (6 à 9) et que, la boîte étant debout, les chambres principales et inférieurs en ce qui concerne le fond (6, 7, 8) forment des bassins collecteurs pour les polluants séparés.

5. Dispositif selon une des revendications 1 à 4, caractérisé en ce que, la boîte (2) étant debout, les corps d'écoulement (18, 23) du premier étage (30) montrent de ses pointes en la direction de là dernière chambre partielle (6).

6. Dispositif selon une des revendications 1 à 5, caractérisé en ce que l'élément d'écoulement (34) de l'élément filtrant centrique (32) du second étage (31) montre de sa pointe vers le haut en la direction de la chambre partielle la plus haute (9), tandis que les éléments d'écoulement (38) à l'entour des éléments filtrants (33, 33') montrent de ses pointes vers le bas en la direction de la dernière chambre partielle (6).

Fig. 1

Fig. 2